(19) Europäisches Patentamt
European Patent Office
Office européen des brevets

(11) EP 3 299 396 A1

(12) **EUROPEAN PATENT APPLICATION**

(43) Date of publication:
**28.03.2018 Bulletin 2018/13**

(21) Application number: **16190707.6**

(22) Date of filing: **26.09.2016**

(51) Int Cl.:
***C08F 4/00*** *(2006.01)* ***C08F 120/16*** *(2006.01)*
***C08F 120/44*** *(2006.01)* ***C08F 120/56*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Technische Universität München**
**80333 München (DE)**

(72) Inventors:
- **KNAUS, Maximilian**
  **81377 München (DE)**
- **GIUMAN, Marco**
  **81379 München (IT)**
- **RIEGER, Bernhard**
  **89275 Elchingen (DE)**

(74) Representative: **Leißler-Gerstl, Gabriele**
**Hoefer & Partner**
**Patentanwälte mbB**
**Pilgersheimer Strasse 20**
**81543 München (DE)**

# (54) POLYMERIZATION OF MICHAEL-TYPE MONOMERS

(57) A system for precision polymerization is disclosed comprising at least one Michael-type monomer and an aluminum compound $AlR^1R^2R^3$ as sole catalyst and initiator, wherein each of R1, R2, and R3 independently is Cl, F, I, Br, linear, branched or cyclic alkyl, heterocycloalkyl, linear, branched or cyclic alkenyl, heterocycloalkenyl, linear, branched, or cyclic alkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl or alkoxy group independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms, or at least one electron-donating or electron-withdrawing group; with the proviso that not all three groups $R^1$, $R^2$, and $R^3$ are halogen, hydroxy, or alkoxy or wherein two of R1, R2, and R3 together with Al form a substituted or unsubstituted cyclic or heterocyclic group having 3 to 6 atoms, wherein a heterocyclic group has at least one hetero atom selected from O, S or N; as well as processes for preparing polymers and the polymers obtained therewith.

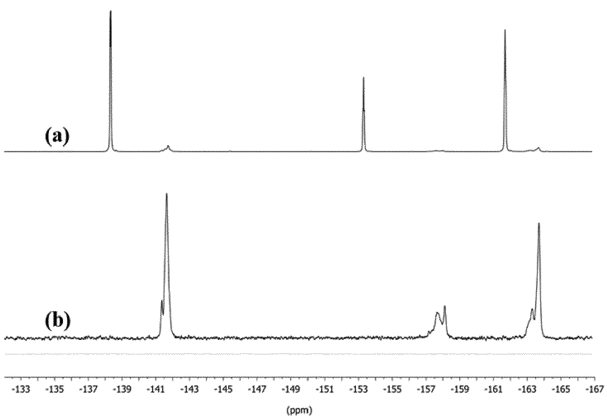


FIG. 1

EP 3 299 396 A1

## Description

### FIELD OF THE INVENTION

The present invention is concerned with a process of polymerizing a Michael-type monomer in the presence of a catalyst/initiator, a method for identifying a catalyst useful for a Michael-type monomer, a process of preparing a functionalized polymer of Michael-type monomers and a polymer obtained therewith.

### BACKGROUND

The polymerization of Michael-type based monomers, for example acryl-based monomers, like methylacrylate, is well-known and common technology, such as radical polymerization, can be used. However, this common technology has its drawbacks and limitations. Radical initiated polymerizations are difficult to control with regard to tacticity and dispersity of polymers. Moreover, demanding monomers like acryl esters having bulky substituent groups, are difficult to polymerize and can be obtained only in low yields or with time and cost consuming processes. Tacticity and dispersity index are hardly or not to control for monomers like acrylonitrile. With the known methods such polymerization reactions could be controlled only by using catalysts comprising noble metals or rare earth metals which cause high cost, need complex catalyst synthesis and/or are detrimental for the environment.

Acryl-based polymers have been prepared in technical processes using free radical polymerization. Examples are the production of polymethacryl acid methyl ester (PMMA), or polyacrylonitrile (PAN). Those polymers are well-known and are used for example as fibers, in paints and dyes. The use of free radicals for polymerization, however, yields polymers with high polydispersity and the reaction is difficult to control. Many attempts have been made to find alternative processes to control the reaction of acrylic monomers. In one approach, acrylic polymers were made by using pure acrylonitrile in solution using the so-called RAFT-technology. This technique, however, does not allow to produce polyacrylonitrile with higher molecular weight but yields polymers with a molecular mass of about up to 16,000 g/mol and with a low dispersity of about 1.1 (see C. Tang et al., Macromolecules 2003, 36, 8587-8589).

On the other hand, it was possible to obtain polyacrylonitrile having high molecular weight (such as Mn > 200,000 g/mol) with a lower polydispersity index (PDI) of 1.7 - 2.0 by using bis(thiobenzoyl)disulfide or bis(thiophenylacetoyl)disulfide. The use of activators for regeneration of RAFT-reagents allows to obtain polymers having a higher molecular weight, however, long reaction times are necessary, the yield is low and reagents for reduction which are expensive and partially toxic, like Sn-(2-ethylhexanoat) have to be applied.

Chen et al. (Y. Zhang et al., Angewandte Chemie 2010, 122, 10356-10360) used Lewis pairs for polymerization to overcome these disadvantages. It was assumed by Chen et al. that the polymerization occurs via a zwitter ionic intermediate structure, wherein the Lewis acid activates the monomer and the Lewis base binds to the activated monomer. Although some acrylic monomers could be polymerized with this technology, it was not possible to use this described process for polymerization of acrylonitrile or for sterically hindered acrylate esters. Thus, the Lewis pairs proposed by Chen et al. for polymerization could be used only for specific monomers, but not for sterically or electronically demanding monomers.

As outlined in Zhang et al. (Dalton transactions 2012, 41, 9119-9134, Synlett 2014, 25, 1534) it was not possible to convert furfurylmethacrylate. Another monomer, n-butylmethacrylate, could be reacted by using Lewis pair catalysis only with a yield of 35%.

Some Michael-type monomers could not or with low yield be polymerized with methods of the prior art, e.g. vinylphosphonates, vinylpyridines or vinylsulfonates. The polymerization and results thereof regarding molecular weight of the polymer, PDI of the polymer, yields, and/or turnover frequencies (TOF) of the catalyst were insufficient.

It is well-known to use aluminum or boron compounds for hydrogenation of unsaturated compounds. Many aluminum and boron compounds are known in this regard. For example it was known to use diethyl-[(4-methyl-pyridin-2-yl)-methyl]aluminum or diethyl-(2-pyridinylmethyl)aluminum for hydrogenation of esters.

Furthermore it has been described by the present inventors that polymers can be prepared from Michael-type monomers by using a Lewis pair as catalyst and initiator compound. For the preparation of polymers a monomer, for example an $\alpha$-acidic Michael-type monomer is contacted with a Lewis acid to form a zwitterionic type complex and after adding a Lewis base the polymerization reaction is started.

Although many methods for polymerization of monomers are known, there are still problems when sterically or electronically demanding monomers are to be polymerized, in particular polymerized in controlled manner, or for providing polymers with tacticity.

Thus, it was an object of the present invention to provide an improved method for polymerization of sterically and/or electronically demanding Michael-type monomers, such as substituted or unsubstituted acrylates, methacrylates, acrylonitrile, acrylamides, methacrylamides, vinylphosphonates or vinyl sulfonates, or heteroaromatic Michael monomers in higher yields, in shorter time periods and/or with controlled tacticity and dispersity.

It was an object of the present invention to provide catalytic compounds and processes for polymerizing Michael-type monomers, in particular demanding Michael-type monomers that until now were not available for controlled polymerization. It was a further object of the present invention to provide catalytic compounds and processes for polymerizing Michael-type monomers which allow to obtain polymers in a higher yield and/or with new properties and/or with reactive or functional end groups. It was a further object of the present invention to provide catalytic compounds and processes for polymerizing Michael-type monomers with improved yield, PDI, turnover frequency and/or molecular mass.

It was a further object of the present invention to provide catalytic processes and catalysts which are environmentally friendly, less time consuming and more efficient than methods of the state of art.

## SUMMARY OF THE INVENTION

The problems are solved by the methods and the compounds and processes of the present invention.

The present invention provides catalyst compounds for catalysis and initiation as well as methods for polymerization of Michael-type monomers as defined in the claims. The new methods and systems allow polymerization of monomers that were not or difficult to polymerize until now. For example, the methods of the present invention can be used for the polymerization of electronically and/or sterically demanding Michael-type monomers such as phosphonate or sulfonate derived monomers, monomers having a substitution on the $\alpha$-position, heteroaromatic monomers or acrylonitrile.

It was found that the above mentioned problems are solved by using methods or catalysts as defined in the claims. Surprisingly, it was found that polymers with desirable properties can be prepared using an aluminum compound as sole catalyst/initiator without the need for any other cocatalyst, initiator or Lewis base, by selecting an optimal aluminum catalyst for a specific Michael-type monomer based on parameters and test methods as described below. In particular it was found that when using a preselected pair of monomer and aluminum compound there is no need to use any further catalyst and/or initiator, in particular there is no need to use a Lewis base to start or continue the polymerization reaction. In other words, by determining the optimal pair of catalyst and monomer there is no need for any further activating, initiating, or catalyzing compound and yet the present system and process allows to prepare polymers of sterically and/or electronically demanding Michael monomers in high yield, in short time, resulting in polymers with controlled, predetermined or regulated molecular mass with excellent yield and/or with controlled tacticity.

Furthermore the dispersity of the polymers can be adapted. Another surprising advantage when using a system or method of the present invention is that a polymer with a functional group can be obtained in an easy manner. It was surprisingly found that a system of a monomer and an adapted aluminum compound as defined provide for activating Michael-type monomers, for starting polymerization and for maintaining a polymerization reaction. Furthermore the combination of the present invention allows the production of novel polymers with properties that were not available until now and can be used for polymerization of demanding monomers.

The critical point is that the Lewis acid can be used as sole catalyst and initiator when monomer and catalyst are adapted to each other. It was found that electrophilicity of the monomer to be polymerized and activity of a Lewis acid have to be adapted and then allow polymerization of the monomer. Thus, when a electron-deficient monomer like acrylonitrile shall be polymerized, a highly active aluminum compound has to be used as catalyst/activator, which does not catalyze electron-rich monomers. If on the other hand an electron-rich monomer is to be polymerized, an aluminum compound with low activity has to be used for good results. For monomers that have a "medium" electrophilicity an aluminum compound having medium activity is used. The selection of the optimal pair of monomer/catalyst is described below. It has been found that an aluminum compound having a suitable activity can be found by using fluoride affinity index (FIA) as parameter.

The present invention is concerned with a system for precision polymerization comprising at least one Michael-type monomer and an aluminum compound of formula I: $AlR^1R^2R^3$, as sole catalyst and initiator, wherein each of $R^1$, $R^2$, and $R^3$ independently is Cl, F, I, Br, linear, branched or cyclic alkyl, heterocycloalkyl, linear, branched or cyclic alkenyl, heterocycloalkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl or alkoxy group independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms, or at least one electron-donating or electron-withdrawing group, with the proviso that not all three groups $R^1$, $R^2$, and $R^3$ are halogen, hydroxy, or alkoxy; or wherein two of $R^1$, $R^2$, and $R^3$ together with Al form a substituted or unsubstituted cyclic group having 3 to 6 atoms. When two of $R^1$, $R^2$, and $R^3$ form a cyclic group with aluminum, the cyclic group comprises 2 to 5 carbon atoms or 2 to 4 carbon atoms and at least one hetero atom selected from O, S or N.

These compounds are suitable for providing higher turnover numbers, higher molecular mass, lower PDIs and higher yields for the polymerization of Michael-type monomers, even for electronically and/or sterically demanding

monomers. The aluminum compounds of the present invention in addition have the advantage that they are more environmental friendly and cheaper than rare earth metal or noble metal compounds.

Additionally, the invention provides a process for polymerization of Michael-type monomers using an aluminum compound as catalyst and initiator, which comprises the steps:

a) contacting an aluminum compound $AlR^1R^2R^3$, optionally dissolved in an organic solvent, with at least one Michael-type monomer, wherein each of $R^1$, $R^2$, and $R^3$ independently is Cl, F, I, Br, linear, branched or cyclic alkyl, heterocycloalkyl, linear, branched or cyclic alkenyl, heterocycloalkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl or alkoxy group independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms, or at least one electron-donating or electron-withdrawing group, with the proviso that not all three groups $R^1$, $R^2$, and $R^3$ are halogen, hydroxy, or alkoxy; or wherein two of $R^1$, $R^2$, and $R^3$ together with Al form a substituted or unsubstituted cyclic group comprising 2 to 5 carbon atoms or 2 to 4 carbon atoms and 1 to 3 hetero atoms selected from O, S or N;

b) continuing the reaction to form a polymer by reaction with at least one type of a Michael-type monomer.

In general the present invention provides methods for preparing polymers by using specific adapted aluminum compounds as sole catalyst/initiator. Generally, an aluminum compound of formula I is contacted with Michael-type monomers, wherein the aluminum compound can either be dissolved in the monomer or in a solvent as described below. Optionally the solution of the aluminum compound is tempered, i.e. the temperature of the solution is adapted. Then one or more types of Michael-type monomers are added and the polymerization usually starts immediately. The polymerization reaction can be stopped by quenching as is well-known in the art.

The present invention also provides polymers which are obtained by the process of the present invention. Such polymers which are for example useful in the medical field (polyvinylphosphonates or polyvinylsulfonates) can be produced under controlled conditions and with less effort and under environmentally friendly conditions.

Furthermore, the present invention provides a process for preparing a functionalized polymer which comprises contacting $AlR^1R^2R^3$, optionally dissolved in an organic solvent, with a Michael-type compound to form a polymer, wherein each of $R^1$ and $R^2$, is independently Cl, F, I, Br or linear, branched or cyclic alkyl, heterocycloalkyl, linear, branched or cyclic alkenyl, heterocycloalkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl, or alkoxy independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms; or wherein $R^1$ and, $R^2$, together with Al form a substituted or unsubstituted cyclic group comprising 2 to 5 carbon atoms or 2 to 4 carbon atoms and 1 to 3 hetero atoms selected from O, S or N, and wherein $R^3$ is a transferable group carrying at least one functional group.

In a first step in the polymerization process of the present invention one of the catalyst ligands or substitutents, respectively, i.e. a transferable group, is transferred to the monomer and becomes the terminal group of the resulting polymer. This transferred ligand or transferable group can be a group as defined above for $R^1$, $R^2$, and $R^3$. As the transferable group, will be the terminal group of the polymer of the present invention, this is an elegant way to provide a desirable group at the end of a polymer. One of the three substitutents of Al is transferred, which for an aluminum compound with three identical groups is one of those and for an aluminum compound with at least two different or three different substituents might be the one group that for energetic reasons leaves easiest or one having the lowest affinity for aluminum. When the transferable group comprises a reactive or functional entity, this entity can be introduced via the transferable group of the aluminum compound. Thereby, the polymers in this embodiment are characterized by having a terminal group which comprises a functional group, like an olefinic group, an aromatic group, a heteroaromatic group, an alkinyl group, a mercapto group, a furfuryl group etc., or a chemoactive or bioactive group, for example a nucleobase. This makes the polymers even more versatile because the terminal group can be used to introduce different functions, to crosslink polymer chains, to immobilise polymer chains etc. For example, an olefinic terminal group can be used for functionalising a polymer by click chemistry or thiol-ene chemistry, it also provides a functional group for immobilisation or marking. Polymers with low and/or controlled PDI can be obtained as well as polymers with controlled tacticity.

The present invention also provides functionalised polymers obtained by the process as claimed.

Furthermore, a process for preparing a polymer having tacticity is provided which comprises contacting $AlR^1R^2R^3$, optionally dissolved in an organic solvent, with a Michael-type compound to form a polymer, wherein each of $R^1$, $R^2$, and $R^3$, is independently Cl, F, I, Br or linear, branched or cyclic alkyl, heterocycloalkyl, linear, branched or

cyclic alkenyl, heterocycloalkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl, or alkoxy independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms; or wherein two of $R^1$, $R^2$, and $R^3$ together with Al form a substituted or unsubstituted cyclic group having 3 to 6 atoms, wherein the cyclic group can comprise at least one further hetero atom selected from O, S or N, and wherein either all three groups $R^1$, $R^2$, and $R^3$ are different or $R^1$ and $R^2$ are the same and $R^3$ is different and is a bulky group.

Further aspects of the present invention are described below in detail.

## BRIEF DESCRIPTION OF THE DRAWINGS

Figure 1 shows an $^{19}$F-NMR (471 MHz, DMSO) spectrum of precipitated short-chained polyacrylonitrile produced with $[Al(C_6F_5)_3]$. Recorded with a Bruker AV500CRYO spectrometer. Expansion of the $\delta$ -167 to -137 ppm region.

(a) NMR sample of the reaction solution, (b) NMR of the same sample after several precipitations.

Figure 2 shows an $^{13}$C-NMR (125MHz) spectrum of the polymer sample produced in example 4 in $CDCl_3$ at 20°C, wherein S indicates signals corresponding to the syndiotactic content, A signals corresponding to the atactic content and I signals corresponding to the isotatic content of the polymer.

Figure 3 shows an ESI MS spectrum of tBuMA oligomers produced with $[Al(nOct)_3]$. One major series of peaks is evident: m/z = n x $M_{Mon}$ + 113 + $M_H$ (red); $M_{Mon}$ = 142, end groups: $M_{nOct}$ = 113.

Figure 4 shows an ESI MS spectrum of IPox oligomers produced with $[Al(C_6H_5)_3]$. One major series of peaks is evident: m/z = n x $M_{Mon}$ + 77+ $M_H$ (red); $M_{Mon}$ = 111, end groups: $M_{C6H5}$ = 77.

Figure 5 shows an ESI MS spectrum of IPox oligomers produced with $[Al(CH_3)_2Cp]$ and $[Al(CH_3)_2Cp^*]$, respectively. One major series of peaks is evident: m/z = n x $M_{Mon}$ + 66+ $M_H$ (red); $M_{Mon}$ = 136.

## DEFINITIONS

The term "aluminum compound" can be one compound or a mixture of compounds of formula I. The term "used as sole catalyst/initiator" means that only one or more aluminum compounds of formula I are used as catalyst/initiator. The term "sole catalyst/initiator" indicates that no further type of catalyst or initiator is necessary, in particular no Lewis base. It has been surprisingly found that an aluminum compound of formula I, as claimed, when used as sole catalyst is active for catalysis and/or initiation of polymerization of demanding monomers even without an $\alpha$-acidic site.

The term "Michael-type monomer" refers to a monomer having a vinyl group and conjugated thereto a double or triple bond, such as a carbonyl group or an unsaturated carbon-carbon-bond.

The term "demanding Michael-type monomer" as used in this application refers to Michael-type monomers having a vinylogous system, which have electronically and/or sterically demanding properties, and which may not be polymerizable in good yields and/or high turnover frequencies and/or low PDIs by conventional catalysts. Examples for those demanding Michael-type monomers which can be polymerized with the catalyst/initiator systems and methods of the present invention are vinyl phosphonates, vinyl sulfonates, substituted or unsubstituted acrylamides, substituted or unsubstituted acrylates and methacrylates, like butyl acrylate, isobutyl acrylate, tert.-butyl acrylate, isobornyl acrylate, furfuryl acrylate, glydidyl acrylate, butyl methacrylate, isobutyl methacrylate, tert.-butyl methacrylate, isobornyl methacrylate, furfuryl methacrylate, glydidyl methacrylate, acrylonitrile, and other vinyl ketones, like acrolein and acrolein derivates, substituted or unsubstituted heteroaromatic monomers, like vinyl pyridine, oxazolines, among others.

The term "bulky" refers to groups of formula I that are sterically and/or electronically encumbering, i.e. sterically hindering. Examples are tert.-butyl, substituted aryl or heteroaryl groups.

The term "precision polymerization" when used in this application refers to polymerization of Michael-type monomers by using the catalyst and initiator of the present invention. This allows polymerization of monomers which are difficult or not (i.e. in a non-controllable manner) to polymerize by conventional anionic polymerization methods or radical polymerization methods. Furthermore this term relates to polymerization processes with a sufficient TOF i.e. short reaction time, which provide polymers with low polydispersity index, high yields, and with controllable molecular weight and tacticity.

The term "tactic" or "tacticity", respectively, includes syndiotacticity and isotacticity.

The term "catalyst and initiator" characterizes aluminum compounds of the present invention which are active

as initiators as well as catalysts for polymerization. The terms "catalyst and initiator" and "catalyst" are used interchangeably, as a catalyst of the present invention also has the function of an initiator.

Groups like alkyl, alkenyl, alkinyl, or alkoxy, heterocycloalkyl, heterocycloalkenyl, heterocycloalkinyl, aryl, heteroaryl, can be substituted or unsubstituted and substituents can be present up to the highest possible number, as long as the compounds retain the necessary properties.

The term "substituted" when used in connection with groups like alkyl, alkenyl, alkinyl, or alkoxy, heterocycloalkyl, heterocycloalkenyl, heterocycloalkinyl, aryl, heteroaryl, indicates that such a group is substituted by at least one substituent and up to the highest possible number of substituents, where the substituents are selected from linear, branched, or cyclic alkyl, alkenyl, alkinyl groups having up to 6 carbon atoms, linear, branched, or cyclic alkoxy groups having up to 6 carbon atoms, halogen, metallocenyl, nitro, nitroso, hydroxy, carboxyl, or aryl, such as phenyl or naphthyl, or heteroaryl.

The term "substituted by halogen" when used in connection with carbon containing groups refers to partially or fully halogenated, such as perfluorinated groups. The term "wherein each alkyl, alkenyl, alkinyl, or alkoxy, heterocycloalkyl, heterocycloalkenyl, heterocycloalkinyl, aryl, heteroaryl, aryloxy group can be substituted by 1 up to the highest possible number of halogen atoms" refers to such groups that can carry only one halogen, in particular chlorine, fluorine or bromine, or more halogen atoms. Any possible number of halogen atoms can be present on a group and the "highest possible number of halogen atoms" refers to groups wherein each hydrogen has been replaced by a halogen atom, in other words that are perhalogenated.

The term "donor substituted" refers to substituents that can add to an electronic system, for example a $\pi$ system or sigma system, such as R, OR, SR, $NR_2$, wherein R is linear or branched alkyl, such as methyl, ethyl, isopropyl, isobutyl, butyl, tert.-butyl, aryl, or heteroaryl as defined above.

The terms "electron-donating"' or "electron-withdrawing" group refer to groups that either are donors or acceptors of electrons or can add to or reduce an electronic system. Electron-donating or electron-withdrawing groups are well-known to the skilled person.

The term "with the proviso that not all three groups $R^1$, $R^2$, and $R^3$ are halogen, hydroxy, or alkoxy;" refers to those compounds where $R^1$, $R^2$, and $R^3$ are identical and, thus excludes $AlHal_3$, $Al(OH)_3$ and $Al(OX)_3$ as catalysts of the present invention.

When for an aluminum compound two of $R^1$, $R^2$, and $R^3$ together with Al form a substituted or unsubstituted cyclic group having 3 to 6 atoms this cyclic group in addition to aluminum comprises either only carbon atoms or carbon and hetero atoms selected from O, S or N. In other words the cyclic group comprises aluminum and 2 to 5 carbon atoms or 2 to 4 carbon atoms and 1 to 3 hetero atoms. One example is a glycol group where both oxygen atoms are bound to aluminum.

## DESCRIPTION OF THE INVENTION

The present invention is concerned with a system of an aluminum compound that is active as catalyst and Michael-type monomers for polymerization. An aluminum compound of the present invention that is active for polymerization of Michael-type monomers as sole catalyst and initiator is an aluminum compound $AlR^1R^2R^3$, wherein each of $R^1$, $R^2$, and $R^3$ independently is Cl, F, I, Br, linear, branched or cyclic alkyl, heterocycloalkyl, linear, branched or cyclic alkenyl, heterocycloalkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl or alkoxy group independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms, or at least one electron-donating or electron-withdrawing group; with the proviso that not all three groups $R^1$, $R^2$, and $R^3$ are halogen, hydroxy, or alkoxy; or
wherein two of $R^1$, $R^2$, and $R^3$ together with Al form a substituted or unsubstituted cyclic group comprising 2 to 5 carbon atoms or 2 to 4 carbon atoms and 1 to 3 hetero atoms selected from O, S or N .

The first step, when it is intended to polymerize a Michael monomer is to assess the electrophilicity or nucleophilicity, respectively, of a monomer, as it has been found that the catalyst has to be adapted with regard to its activity. For the sake of simplicity Michael-type monomers can be classified in three groups:

Group A: monomer with electron deficiency or high electrophilicity
Examples are vinylpyridine, acrylonitrile;
Group B: monomers having medium electrophilicity
Examples are oxazolines, acrylates, acrylate esters methacrylates, methacrylate esters,; and
Group C: monomers having low electrophilicity or electron-rich monomers
Examples are acrylamides, vinylphosphonates, vinylsulfonates.

Catalysts that are active for the polymerization of Michael-type monomers can be found based on a classification in the above groups, i.e. based on the electrophilicity of the monomer. It seems that by combining a Michael-type monomer with an adapted catalyst, where the adaption can be done as described below, provides activation energy such that even very difficult to polymerize monomers can form polymers, such as vinyl sulfonates or vinyl phosphonates, vinyl pyridines or vinyl based monomers with substitution at the $\alpha$ site.

The evaluation of those parameters that influence the catalytic activity of the applied aluminum compound and the reactivity of the applied monomers can be achieved by using methods and values disclosed in the prior art. The gist of the present invention is the use of parameters that were known, but were used in other fields or for other reactions. It was found by the inventors, that on the one hand electrophilicity of a monomer and on the other hand affinity for fluoride ions of aluminum compounds allow to evaluate polymerizability of a pair of monomer/catalyst.

Thus, it was found that for the monomer reactivity towards the Group Transfer Polymerization (GTP) is a useful parameter. Methods to determine reactivity towards GTP have been described in the literature and scales have been established for the polymerization via rare earth metal-based catalysts. These methods can be used to classify monomers in groups A, B, or C as outlined below. In the below mentioned documents it is shown that coordination strength of the monomers towards a metal center can be determined via NMR experiments as well as copolymerization experiments. The reactivity of some common Michael-type monomers correlates with their coordination strength towards a metal center as well as with their $pK_a$ values in the following order: 2VP < iPOx < Methacrylates < Acrylates < Acrylamides < Vinylphosphonates ~ Vinylsulfonates

(See Salzinger, Stephan. Expansion of Rare Earth Metal-Mediated Group Transfer Polymerization to New Monomers. Diss. Technische Universität München, 2013. (P.218); Soller, Benedikt. Rare Earth Metal-Mediated Group Transfer Polymerization of Vinylphosphonates: Initiation, Propagation, and Stereoregularity. Technische Universitat München, Diss. Technische Universität München, 2016; Soller, Benedikt S., Stephan Salzinger, and Bernhard Rieger. "Rare Earth Metal-Mediated Precision Polymerization of Vinylphosphonates and Conjugated Nitrogen-Containing Vinyl Monomers." Chemical reviews 116.4 (2015): 1993-2022; Zhang, Ning, et al. "Rare earth metal-mediated group-transfer polymerization: from defined polymer microstructures to high-precision nano-scaled objects." Journal of the American Chemical Society 135.24 (2013): 8810-8813.)

Thus, monomers can be classified as monomers of Group A (as defined above), that are weakly coordinating monomers with a low reactivity towards a GTP; as monomers of Group B (as defined above), that have a low to medium reactivity and coordination; or as monomers of group C (as defined above), that are very reactive and strongly coordinating monomers.

The other useful parameter is fluoride ion affinity index (FIA) which is used for the quantification of Lewis acidity. Although methods to determine acidity are well-known, these are not applicable to determine Lewis acidity, in particular for sterically demanding compounds. It was found that there is a good correlation between fluoride ion affinity of a compound, i.e. energy released upon the coordination of a fluoride ion to a Lewis acid center in kJ/mol and Lewis acidity. Therefore, high FIA values represent a strong Lewis acidic center. (see Haartz, J.; McDaniel, D. H. J. Am. Chem. Soc. 1973, 95, 8562; Larson, J.; McMahon, T. J. Am. Chem. Soc. 1985, 107, 766; Müller, L. O.; Himmel, D.; Stauffer, J.; Steinfeld, G.; Slattery, J.; Santiso-Quiñones, G.; Brecht, V.; Krossing, I. Angew. Chem., Int. Ed. 2008, 47, 7659.)

Ingo Krossing and others developed a method to determine the fluoride affinity index for Lewis acids. The FIA is an indicator for the acidity of the Lewis acid. It is known inter alia from N. Bartlett et al. (Inorg. Chem. 1984, 23, 3167 - 3173) that the fluoride ion affinity (FIA) is a reliable measure of the Lewis acidity, combining the strength of a Lewis acid A(g) with the energy that is released upon binding a fluoride ion F-:

$$A_{(g)} + F^-{}_{(g)} \xrightarrow{\Delta H = -\mathrm{FIA}} AF^-{}_{(g)}$$

The higher the FIA of the parent Lewis acid A, the more stable it is towards decomposition on thermodynamic grounds. The simplest and most general access to reliable FIA values comprises the use of quantum chemical calculations in isodesmic reactions. The following table 1 shows calculated FIAs of a representative set of strong neutral Lewis acids.

**Table 1**

| Lewis acid/anion | FIA |
|---|---|
| $Al(OR^F)_3/[FAl(OR^F)_3]^-$ | 537 |
| $Al(C_6F_5)_3/[FAl(C_6F_5)_3]^-$ | 530 |
| $AlI_3/[FAlI_3]^-$ and $AlBr_3/[FAlBr_3]$ | 393 |

The first compound in table 1 is too strong to be active as catalyst. The second compound, trispentafluorophenylaluminum ($Al(C_6F_5)_3$) having a high FIA of 530 is very strong and readily polymerizes monomers of group A. On the other hand, $AlCl_3$,$AlI_3$ and $AlBr_3$ are very weak Lewis acids and do not polymerize any of the tested Michael-type monomers. Thus, a suitable catalyst has a FIA of 530 down to more than 393. Aluminum compounds having a FIA in the range of 530 or below but not higher than 530 are suitable for polymerization of monomers of group A, those having a FIA in the medium range are suitable for monomers of group B, and those having a FIA of higher than 393 are suitable for monomers of group C.

To confirm the above explanations experiments were carried out and the results showing the polymerization activity of monomers and catalysts are summarized in table 2. For example, polyacrylonitrile can be synthesized with extreme turnover frequencies (TOF) in high yields within a short timescale by the use of trispentafluorophenylaluminum ($Al(C_6F_5)_3$) as catalyst. (see table 2, exp. 1). Fluorine endgroups could be revealed through $^{19}$F-NMR, which implies that one of the catalyst ligands has been transferred to the polymer chain end as previously mentioned (Figure 1). If triphenylaluminum ($Al(C_6H_5)_3$) is used as catalyst for polyacrylonitrile, no polymerization can be observed, because its FIA, and thereby the Lewis acidity of this catalyst is not sufficient for the polymerization of monomers of group A due to the missing electron-withdrawing groups, e.g. fluoride groups (see table 2, exp. 2).

While trispentafluorophenylaluminum ($Al(C_6F_5)_3$) is a suitable catalyst for the polymerisation of the less reactive and weakly coordinating monomers of group A, no polymerization can be observed when the same catalyst is applied for the polymerization of monomers of group B or C. Without being bound by theory, it is assumed that the Lewis acidity as shown by the high FIA of this catalyst is too strong for the polymerization of the more reactive monomers of group B. In fact, the use of the less acidic triphenylaluminum ($Al(C_6H_5)_3$) results in a successful polymerization of those monomers (see table 2, exp. 3).

The same correlation can be observed when the Lewis acidity of the applied catalyst has a FIA in the medium range, i.e. well below 530 but also well above 393. Attempts to polymerize monomers of group B with less acidic Lewis acids such as triethylaluminum ($Al(C_2H_5)_3$) or triisobutylaluminum ($Al(C_4H_9)_3$) failed, confirming the above-mentioned assumption (table 2, exp. 4-5). In contrast to this, these catalysts perform well in the polymerization of monomers of group C. Triethylaluminum ($Al(C_2H_5)_3$) and triisobutylaluminum ($Al(C_4H_9)_3$) as well as trioctylaluminum ($Al(C_8H_{17})_3$) polymerize monomers of group C such as dimethylacrylamide (table 2, exp. 6-8). Less acidic Lewis acids such as aluminumbromide (FIA: 393) and aluminumiodide (FIA: 393) are not active catalysts for the polymerization of the reactive and strongly coordinating monomers of group C, due to their low FIA (table 2, exp. 9-10)

In summary, according to the present invention it is possible to identify suitable catalysts for polymerisation of demanding Michael-type monomers with these two useful parameters according to the following approach:

Monomers of group A with a low reactivity and coordination strengh need very strong Lewis acids with a high FIA in order to be succesfully polymerized.

Monomers of group C, on the other hand, i.e. highly reactive and coordinating monomers, do not require strong Lewis acids, and can therefore be polymerized by using weak Lewis acids, with a low FIA.

Monomers of group B, i.e. with medium reactivity and coordination strength can be polymerized with Lewis acids having medium acidity.

The critical point is that monomer and catalyst have to be adapted. If an electron-poor monomer shall be polymerized like acrylonitrile, a Lewis acid having a high fluoride affinity index has to be used. If an electron-rich monomer is polymerized, a Lewis acid having a low fluoride affinity index is used. For monomers that have a "medium" electron density a Lewis acid having a medium fluoride affinity index is used.

Table 2 shows selected combinations of Lewis acids having different acidity and their suitability towards the GTP of various Michael-type monomers. For a better comparability, the reaction time has been kept constant. Quantitative Yields would have been achieved by extending the reaction time. The examples describe further combinations and conditions.

**Table 2**

| Exp. | Mon. | LA | t[s] | Mon./LA | $M_n$[b] | D | Y [%][c] |
|---|---|---|---|---|---|---|---|
| 1 | AcN | $Al(C_6F_5)_3$ | 30 | 1000 | 350 | n.d. | 74 |
| 2 | tBuMA | $Al(C_6F_5)_3$ | 3600 | 100 | - | - | 0 |
| 3 | tBuMA | $Al(C_6H_5)_3$ | 3600 | 100 | 23 | 1.06 | 62 |
| 4 | tBuMA | $Al(C_2H_5)_3$ | 3600 | 100 | - | - | 0 |
| 5 | tBuMA | $Al(C_4H_9)_3$ | 3600 | 100 | - | - | 0 |
| 6 | DMAA | $Al(C_2H_5)_3$ | 3600 | 100 | 235 | 1.52 | 57 |

(continued)

| Exp. | Mon. | LA | t[s] | Mon./LA | $M_n$[b] | D | Y [%][c] |
|---|---|---|---|---|---|---|---|
| 7 | DMAA | $Al(C_4H_9)_3$ | 3600 | 100 | 20 | 1.35 | 80 |
| 8 | DEVP | $Al(C_8H_{17})_3$ | 3600 | 100 | n.d. | n.d. | 70 |
| 9 | DEVP | $AlBr_3$ | 3600 | 100 | - | - | 0 |
| 10 | DEVP | $Al(I)_3$ | 3600 | 100 | - | - | 0 |

[a] Exp 1: total solvent volume 7.0 mL (solvent *N, N*-dimethylformamide), ] Exp 2-10: total solvent volume 2.0 mL (solvent Toluene) T= 60 °C (exept Exp 1 = RT)
[b] determined by GPC coupled with
multi angle laser light scattering (MALS), reported in $10^3$ g/mol,
[c] yield measured gravimetrically and by $^1$H NMR spectroscopy.

In summary, strong Al(III)-based Lewis acid catalysts are suitable for the polymerization of monomers of the group A, while they are not suitable for monomers of the other groups due to their high Lewis acidity. Weaker Lewis acids are required for the polymerization of monomers of the group B and C. Monomers of the group C require the lowest Lewis acidity and FIA in order to be successfully polymerized. The classification for the groups A, B, C is not strict and catalysts can be found that are useful in an overlapping range. Therefore, it might be possible to polymerize some monomers classified for group C with Lewis Acids found suitable for group B, in particular when the electrophilicity of the monomer is close to that of monomers of group B.

With these parameters being defined, an approach for a polymerization of Michael-type monomers by the method of the present invention can be as follows:

At first, it is determined whether a monomer belongs to group A, B or C, either by comparison with known monomers or by its reactivity.
At second, a catalyst with an adequate FIA/Lewis acidity is chosen. If the monomer has been assigned to Group A, a catalyst with a strong Lewis acidity and high FIA is applied. If a monomer has been assigned to Group B a catalyst with a weaker Lewis acidity and lower FIA is chosen. If a monomer belongs to group C a catalyst with a low Lewis acidity is selected.

To evaluate if the two components of the system - cataylst and monomer - are suitable, the polymerization activity can be tested. Any method for testing polymerization can be used, and the results of different runs are compared. In one embodiment, a catalyst is tested as follows: an aluminum compound of formula I is combined with a monomer for polymerization in a ratio of catalyst to monomer of 1:100 in an organic solvent, such as N,N-dimethyl formamide, at a temperature of 40°C for 60 min. These conditions have been found useful for testing, but other conditions can be used as well, as long as the same conditions are used for comparison.

After the reaction has been terminated by the addition of a quenching reagent such as an alcohol the polymer is precipitated in an organic solvent and fully characterized via common analytical techniques. In the examples this method is also described. Some results of this method are shown in figures 1-5 and in tables 2, 4, and 5.

If the yield of the polymer as well as the initiator efficiency of the reaction (expected molecular mass ($M_{n(exp)}$/ detected molecular mass $M_{n(det)}$) are satisfactory (>50 %) the chosen catalyst is suitable for the polymerization of this monomer. If the measured values are not satisfactory a Lewis acid with another Lewis acidity and FIA is chosen and the step is repeated.

In the following table 3 useful combinations of pairs of monomer and catalyst are summarized. This table is a general guideline. When looking for another suitable pair it is useful to assess the monomer to one of groups A, B, and C and then select a catalyst based on the above explained rules or based on the following table 3.

Table 3 shows examples of Lewis acids and their suitability for the polymerization of exemplary Michael-type Monomers of the previously defined groups A, B and C.

## Table 3

| | Group A | | Group B | | | | | Group C |
|---|---|---|---|---|---|---|---|---|
| | AcN | 4-VP | ipOx | MMA | tBuMA | EA | tBuA | DMAA |
| $Al(C_6F_5)_3$ | X | X | - | - | - | - | - | - |
| $Al(C_6H_5)_3$ | - | - | X | X | X | X | X | X |
| $Al(CH_3)_2(SC_6H_5)$ | - | - | - | X | X | X | X | X |
| $Al(CH_3)_2(OC_6H_5)$ | - | - | - | X | X | X | X | X |
| $Al(C_4H_9)_3$ | - | - | - | - | - | - | X | X |
| $Al(C_2H_5)_3$ | - | - | - | - | - | - | X | X |
| $Al(CH_3)_3$ | - | - | - | - | - | - | X | X |

$V_{solvent}$ = 2 mL, T = 40°C, t = 60 min.

If an electron deficient monomer like acrylonitrile is combined with an aluminum compound having low acidity, like triphenylaluminum, no reaction takes place. If an electron-rich monomer like DMAA is reacted with a highly acid aluminum compound like aluminumtriperfluorophenyl no polymerization takes place. With the knowledge of the present invention it is possible to find the best suited catalyst and/ or to fine-tune the system.

When a pair of monomer and aluminum compound has been found, the reactivity in polymerization is tested as outlined above. If the reactivity is not sufficient, the aluminum compound can be adapted. If the acidity of the aluminum compound is too high, at least one of $R^1$, $R^2$, and $R^3$ should be substituted by an electron donating group. If the aluminum compound is too active, at least one of $R^1$, $R^2$ and $R^3$, should be substituted by an electron withdrawing group.

Some useful aluminum compounds of formula I are shown in the following:

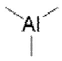 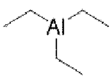 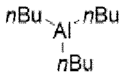 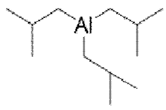 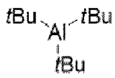 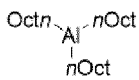 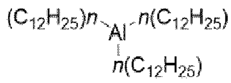

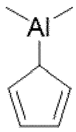 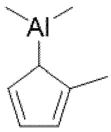 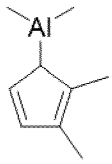 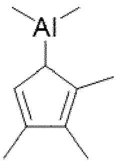 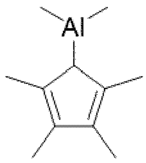 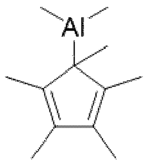

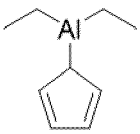 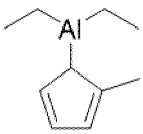 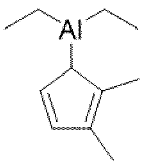 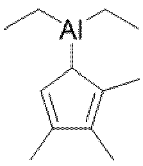 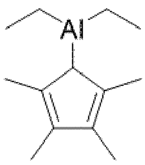 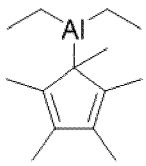

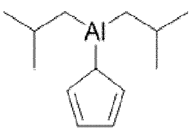 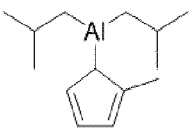 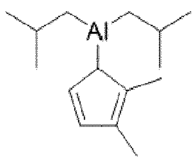 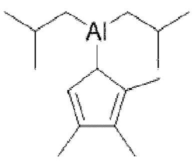 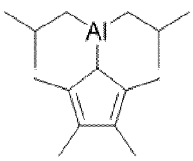 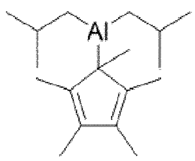

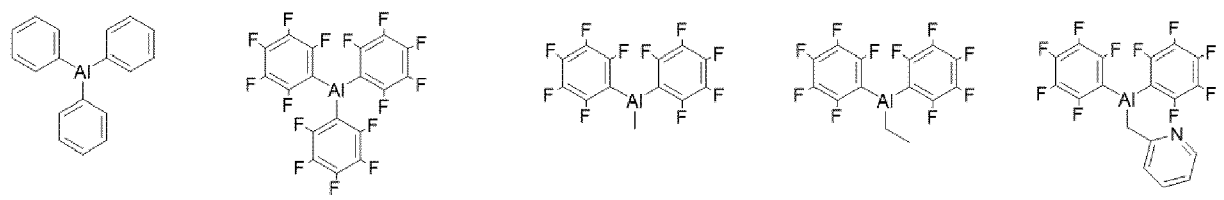

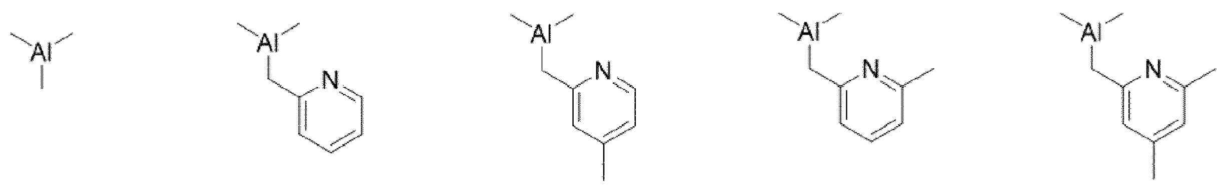

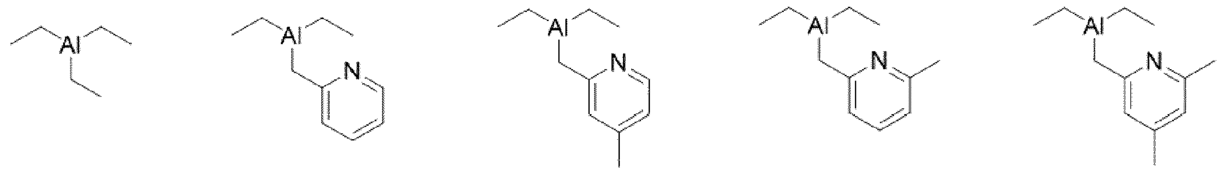

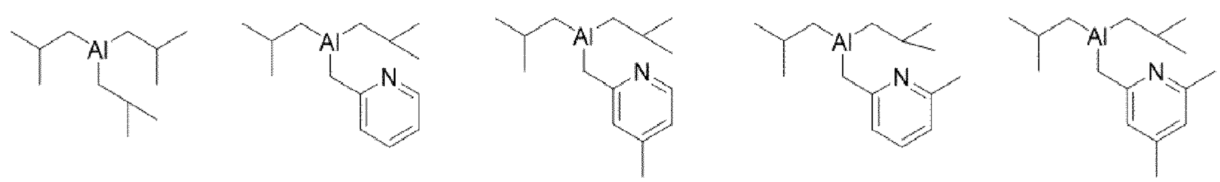

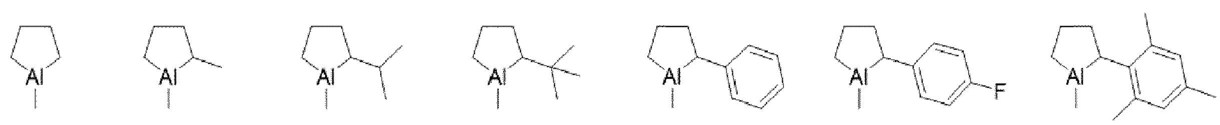

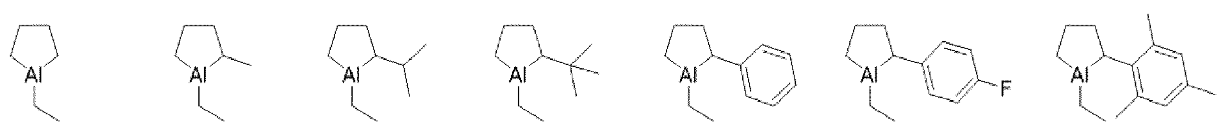

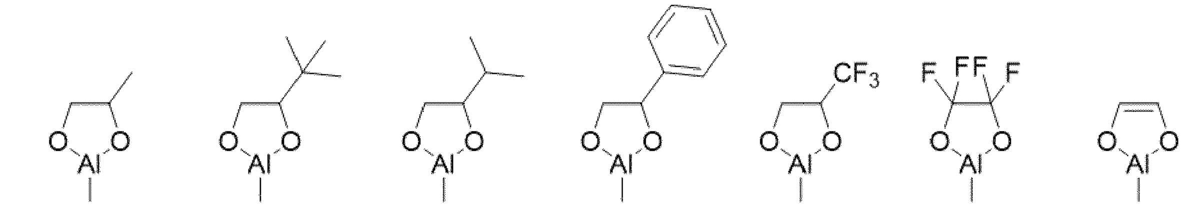

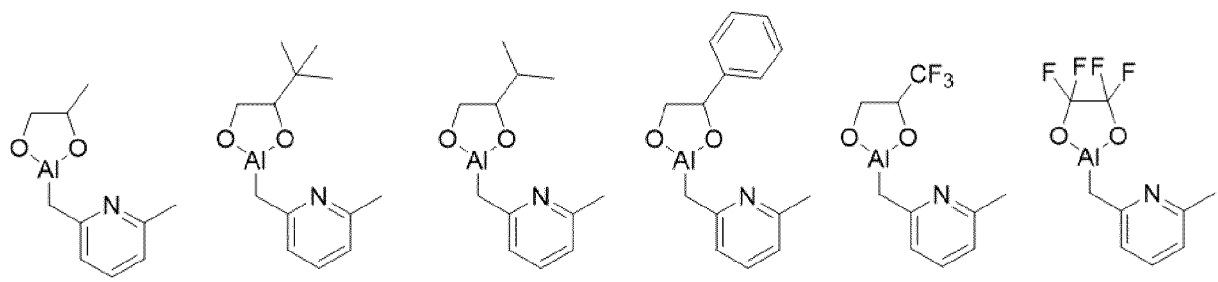

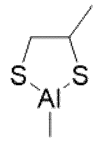
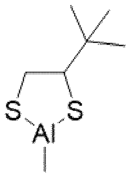
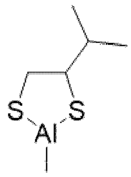
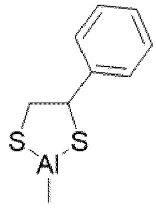
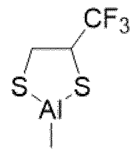
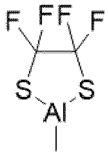
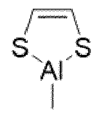

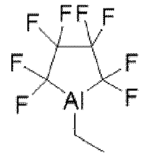
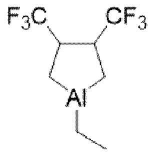
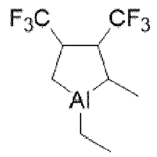
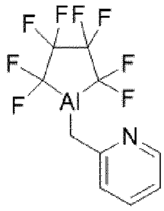
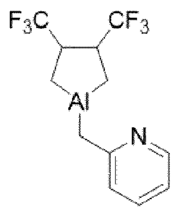
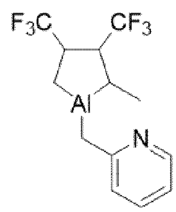

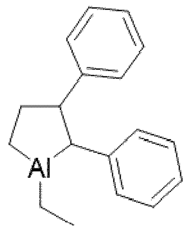
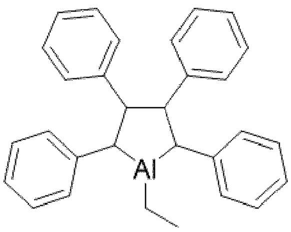
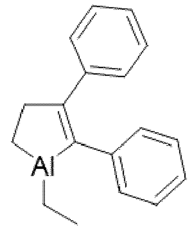
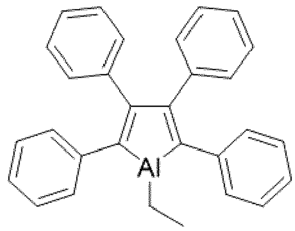

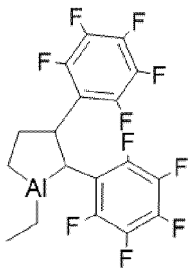
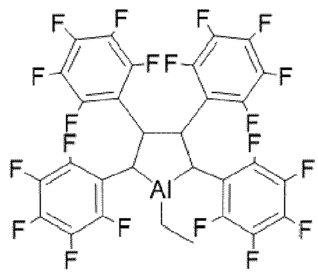
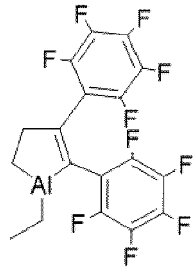
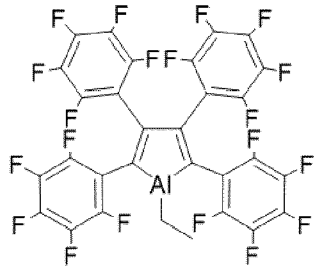

Aluminum compounds of formula I are either commercially available or can be prepared with known methods with commercially available products. One common technique is to contact commercially available chlorinated aluminum precursors such as chloro-dialkyl-aluminates and a potassium salt bearing the desired group, for example, pentamethylcyclopentadiene potassium which yields the desired aluminum compound. An example for a synthesis is shown in Scheme 1

## Scheme 1

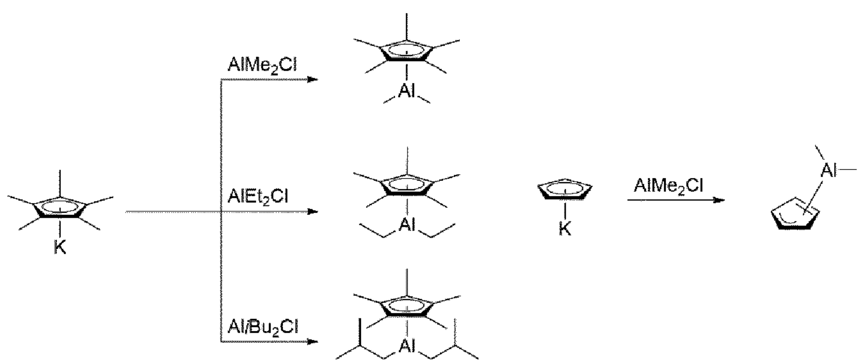


The aluminum compounds of formula I are active as catalyst and initiator. Without being bound by theory, it is assumed that monomer and catalyst/initiator of the present invention react according to the following mechanism as shown in Scheme 2:

**Scheme 2**

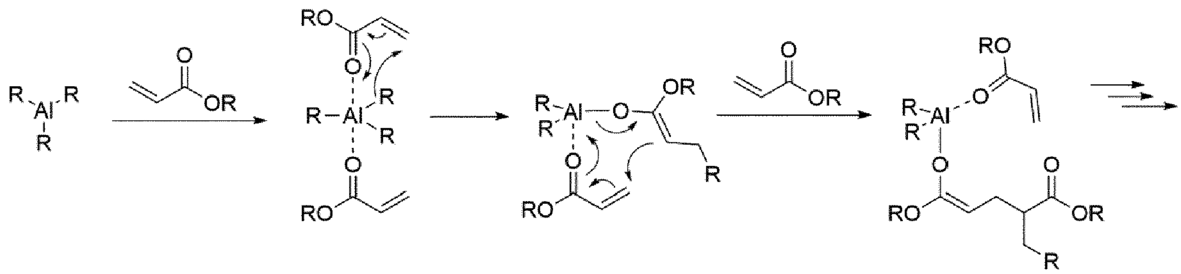

The residues $R^1$, $R^2$ and $R^3$ of the aluminum compound used as catalyst and initiator have an influence on the acidity and residues can be selected in each case for adjusting the Lewis acid strength. This means, if one or more of the groups $R^1$, $R^2$ and $R^3$ are electron withdrawing groups (EWG), the Lewis acidity is increased, vice versa the Lewis acidity is decreased if $R^1$ and/or $R^2$ are electron donating groups. Therefore, the Lewis acidity can be adjusted and fine-tuned accordingly to the chemical polymerization requirements of a specific type of Michael-type monomer used. As an example, at least one of $R^1$ and $R^2$ can be an EWG like a fluorinated or perfluorinated alkyl or aryl, such as $CF_3$, $CF_2CF_3$, $C_6F_{5,}$, or an electron donating group like alkyl or cycloalkyl, such as methyl, ethyl, propyl, isopropyl, butyl, isobutyl, tert.-butyl, neopentyl, octyl, phenyl, cyclopentadienyl, tetramethyl-cyclopentadienyl, pentamethyl-cyclopentadienyl.

Furthermore, $R^1$, $R^2$ and $R^3$ can have an influence on the steric interaction between the catalyst and initiator compound and the monomer which can also control tacticity It has been found that syndiotacticity can be increased by increasing the size of substituents at the aluminum, i.e. at least one of $R^1$, $R^2$ and $R^3$. When an asymmetric aluminum compound with at least one bulky group is used as catalyst for polymerizing dimethyl acrylamide syndiotacticity of the polymer obtained can be in the range of up to more than 80 %, whereas when using a symmetric aluminum compound in particular one with small substitutents usually an atactic polymer is obtained.

The use of the catalytic and intiatiator compounds of the present invention provides for kinetic advantages and results in higher turnover frequencies of up to 10,000 or even more, such as 50,000 to 100,000. Furthermore, it was found that catalyst activity, polymer yield, molecular mass of the final polymer and polydispersity index are dependent from the molar ratio of monomer to catalyst system, in other words the catalyst loading. It was found, that a high catalyst loading, i.e. a molar ratio of monomer/catalyst of less than 1000 results in a high yield, nearly stoichiometric monomer consumption and a low molecular mass. Thus, the molar ratio of monomer/catalyst system can for example be in a range of 1:0.5 to 2000:1, such as 1:1 to 1000:1.

As outlined above many types of monomers can be polymerized with the system and the method of the present invention. Examples of demanding Michael-type monomers that can be polymerized in high yield, with high TOF and with interesting properties are vinylphosphonates, in particular diethylvinylphosphonate, or diisopropylvinylphosphonate; vinylsulfonates; substituted or unsubstituted acrylates and methacrylates, such as methylacrylate, butyl acrylate, isobutyl acrylate, tert.-butyl acrylate, isobornyl acrylate, furfuryl acrylate, glydidyl acrylate, hexylacrylate, methylmethacrylate, butyl methacrylate, isobutyl methacrylate, tert.-butyl methacrylate, isobornyl methacrylate, furfuryl methacrylate, glydidyl methacrylate; substituted or unsubstituted acrylamides, such as methacrylamide, dimethylacrylamide, di-isopropylacrylamide; acrylonitrile; vinylpyridines; vinyl ketones, such as vinylmethylketone; acrolein and acrolein derivates. Mixtures of these monomers can be used to prepare copolymers.

The process of the present invention can be carried out in a broad temperature range. Polymerization reactions can be conducted with Michael-type monomers in a range of -115 °C to 150 °C. In most cases, the process of the present invention can be carried out at about room temperature, which is advantageous as no heating or cooling is necessary. Activity of the catalyst and initator compound can be increased, by lowering the temperature to 0 °C or below and very favourable results can be obtained. High conversion rates are obtained between about 0 °C and room temperature, i.e. 25 °C. Thus, although the process can be used in a broad temperature range, in a preferred embodiment, the process is carried out at a temperature between -10 °C and 40 °C, preferably between 0 and 25 °C. The optimum temperature for a specific process can be found in routine tests depending on the catalyst and initiator compound, monomer and solvent used.

In a preferred embodiment, the process of the present invention can be carried out under protection gas which can be selected from nitrogen, helium, argon, xenon and other protection gases known to the person skilled in the art.

The process of the invention allows high polymeric yields such as at least 80% conversion of the Michael-type monomers, or even between 90 and 100% or about 100%.

The process of the present invention allows to also control polydispersity and to obtain polymers having a low to very low polydispersity index.

The process of the present invention usually is carried out in a fluid medium which can be the monomer or an

organic solvent which dissolves the monomer, in a salt melt, or a gas. The term "organic solvent" as used in the present application refers to a compound that is liquid at room temperature and/or process temperature. Organic solvents that are suitable for the preparation of polymers from Michael-type monomers are known and those that are used in the prior art can be used for the process of the present invention, too. Usually aromatic or aliphatic hydrocarbons, heteroaromatic and heteroaliphatic compounds, as long as they are liquid at process temperature, or ionic solvents are suitable. Also salt melts as well as supercritical $CO_2$ can be used. Aromatic hydrocarbons that are very common in this field are preferred, such as toluene which is particularly useful.

An organic solvent in the process of the present invention can have different functions: it can be used as inert carrier that not necessarily dissolves both components; i.e. aluminum catalyst and monomer, it can be used to dissolve the monomer; it can be used as heat dissipating agent. Furthermore, the polarity of the solvent can have an influence on the tacticity. Thus, in cases where tacticity is an issue the polarity of the solvent has to be considered and a suitable solvent has to be selected. Furthermore, in some embodiments the monomer can be the solvent for the aluminum compound and no additional solvent is necessary. The amount of solvent is that which is usually used. By increasing or decreasing the amount of solvent, the activity and the duration can be influenced as it is well-known to the skilled person.

The present invention is also concerned with the use of an aluminum compound of formula I as defined above and in the claims as catalyst and/or initiator for polymerization of Michael-type monomers.

The present invention also relates to polymers which are obtainable by a catalyst and initiator and by the processes of the present invention. As already indicated, according to the present invention polymers can be obtained that are characterized by having a terminal functional group such as an olefinic end group, an aromatic group, a heteroaromatic group, an alkinyl group, a mercapto group, a furfuryl group etc., or a chemoactive or bioactive group, for example a nucleobase. The terminal functional group can be used, to crosslink polymer chains, to immobilise polymer chains etc.

Such a terminal group allows functionalization and chemical variation. Thus, the polymers can be functionalized in many different ways so that a versatile product is provided. The terminal group can be used for coupling other molecules like other polymers to form blockcopolymers. Furthermore, functional groups can be easily introduced by using click chemistry or thiol-ene chemistry. Furthermore, reactions with transition metal catalysts allow copolymerisation with olefinically unsaturated monomers like ethene or propene.

The present invention allows to obtain polymers, wherein the polymer is a polymer or copolymer of one or more of Michael monomers selected from the group consisting of vinylphosphonate, in particular diethylvinylphosphonate, or diisopropylvinylphosphonate; vinylsulfonate, substituted or unsubstituted acrylate and methacrylate, such as methyl acrylate, butyl acrylate, isobutyl acrylate, tert.-butyl acrylate, isobornyl acrylate, furfuryl acrylate, glydidyl acrylate; butyl methacrylate, isobutyl methacrylate, tert.-butyl methacrylate, isobornyl methacrylate, furfuryl methacrylate, glydidyl methacrylate substituted or unsubstituted acrylamide, such as methacrylamide, dimethylacrylamide, acrylonitrile, vinylpyridine, vinyl ketone, acrolein or an acrolein derivate, or mixtures thereof.

Furthermore, the system of the present invention allows to polymerize tactic polymers by selecting a catalyst that favours tacticity. Therefore, another subject of the present invention is a process for preparing a polymer having tacticity comprising contacting a Michael-type compound, optionally dissolved in an organic solvent, with $AlR^1R^2R^3$ to form a polymer, wherein each of $R^1$, $R^2$, and $R^3$, is independently Cl, F, I, Br or linear, branched or cyclic alkyl, heterocycloalkyl, linear, branched or cyclic alkenyl, heterocycloalkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl, or alkoxy independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms; and wherein either all three groups $R^1$, $R^2$, and $R^3$ are different or $R^1$ and $R^2$ are the same and $R^3$ is different and is a bulky group; or wherein two of $R^1$, $R^2$, and $R^3$ together with Al form a substituted or unsubstituted cyclic group comprising 2 to 5 carbon atoms or 2 to 4 carbon atoms and 1 to 3 hetero atoms selected from O, S or N. An aluminum compound can for example carry one transferable group, one sterically encumbered group, like tert-butyl or heteroaryl, and one small group like methyl or ethyl.

It has been found that by using an asymmetric aluminum compound as defined above it is possible to prepare tactic polymers. Without being bound by theory it is assumed that a polymer with enhanced tactic content is produced if the applied catalyst is substitued by ligands with different sterical encumberance. As soon as the initiating step takes place one of the catalyst ligands is transferred to the coordinating monomer. If the remaining catalyst ligands are of different sterical encumberance, the growing polymer chain will be directed to the less demanding ligand. Therefore, a preferred arrangement of growing polymer chain catalyst ligands and new monomer will take place. This preferred arrangement will result in the formation of a tactically enriched polymer.

## EXAMPLES

In the examples polymers were prepared and were tested using gel permeation chromatography (GPC) for detection. GPC was made using a WTC Dawn Heleos II MALS detector. GPC was carried out on a Varian LC-920 system with two PL polar gel columns and N,N-dimethyl formamide (0.025 M LiBr) (polyacrylonitrile) or tetrahydrofurane/water (0.025 M tetrabutylammoniumbromide) (vinylphosphonates and vinylpyridines)) or tetrahydrofurane (acrylates or methacrylates) were used as liquid medium. The retention times were recorded via a MALLS detector and via an integrated RI detector (356-LC). The GPC spectrum is shown in Fig. 2.

The NMR spectra were recorded with an AV III 500C of Bruker and were evaluated with Top Spin 3 software.

In the following examples specific embodiments of the present invention are shown without thereby limiting the scope of the invention.

Monomers like acrylonitrile, methacrylates, and 2-isopropenyl-2-oxazoline were polymerized using an aluminum compound adapted in acidity. The conditions and results are shown in Tables 4 and 5. The method is described in detail below.

### Example 1

Polyacrylonitrile was synthesized using 3 different aluminum compounds as catalyst and initiator in the polymerization reaction. Different ratios of monomer/catalyst were used. For each run the catalyst was added to 7.0 ml N,N-dimethylformamide as solvent. The reaction temperature was 40°C. The results are shown in Table 4.

**Table 4**

Selected results of the polymerization of acrylonitrile with different catalysts at 0°C.

| Run | Lewis acid | t[s] | Mon./LA. | Mn[(a)] | Mw[(a)] | D | Y[%] | TOF [$h^{-1}$] |
|---|---|---|---|---|---|---|---|---|
| 1 | $Al(C_6F_5)_3$ | 5 | 4000 | 105 | 168 | 1.59 | 4 | 115,000 |
| 2 | $Al(C_6F_5)_3$ | 15 | 4000 | 30139 | 228 | 1.64 | 10 | 103,000 |
| 3 | $Al(C_6F_5)_3$ | 30 | 4000 | n.d. | 692 | n.d. | 23 | 110,000 |
| 4 | $Al(C_6F_5)_3$ | 150 | 8000 | n.d. | 1600 | n.d. | 46 | 88,000 |
| 5 | $Al(C_6F_5)_3$ | 30 | 1000 | n.d. | 350 | n.d. | 74 | 89,000 |
| 6 | $Al(Ph)_3$ | 600 | 2000 | - | - | - | - | - |
| 7 | $B(C_6F_5)_3$ | 600 | 2000 | - | - | - | - | - |

[a] determined by GPC

As can be seen acrylonitrile was polymerized very efficient with Al(C6F5)3 as acrylonitrile is an electron-deficient monomer and Al(C6F5)3 is a highly active catalyst, i.e. a strong Lewis acid. When a less strong Lewis acid was used, (Al(Ph3)3, no polymerisation took place. A boron compound that is known as catalyst was also tested and did not yield a polymer.

### Example 2 (for comparison)

Acrylonitrile was usedas monomer with $AlCl_3$ as catalyst as known in the prior art. The reaction was performed in oven-dried glass reactor, $AlCl_3$ (302 μL, 12.5 mmol/L suspension in toluene) was added and cooled to 0°C. Acrylonitrile (500 μL, 3.77 mmol, 400 mg, 2,000 equivalents) and thereafter tricyclohexylphosphine ($PEt_3$) (151 μL, 25.0 mmol/L solution in toluene, 1 equivalents) were added and the mixture was stirred for 15 min at 0°C. The reaction was stopped by adding a mixture of DMF-MeOH-HCl (100:10:1). A sample was taken and an $^1H$-NMR was recorded. The reaction yielded no polymer, although a Lewis base was added for activation.

### Example 3

Polymerisation experiments were carried out with different monomers and catalysts. The reaction time was 60 min. The catalyst was added to toluene as solvent, the total solvent volume was 2 mL. For experiment 11 pentane was used as solvent. The molecular mass was determined by GPC-MALS or dual angle laser light scattering in $H_2O$/THF (9

g/L tetrabutylammonium bromide) or THF at 40 °C, reported in $10^3$ g/mol, The yield was measured gravimetrically and by $^1H$ NMR spectroscopy, rr [%] was determined by $^{13}C$ NMR spectroscopy, 21. For experiment 14 ACF induces a cationic ring opening polymerization. The results are summarized in Table 5.

As can be seen from the results in Table 5, polymerization occurs only when catalyst and monomer match.

In experiment 8 a monomer of group B is reacted with a strong Lewis acid and no reaction is seen. In experiments 12 and 13 a too weak catalyst is used and no polymerization occurs. When using in experiments 9-11 a suitable Lewis acid the polymerization runs very well. The same effect is shown in experiments 14, with no polymerization with a strong catalyst versus experiments 15-18 with good results. These results confirm that by selecting a suitable aluminum compound difficult monomers can be polymerized that could not be polymerized by GTP until now.

**Table 5**

Selected results of the polymerization of Methacrylates and Oxazolines with Al(III)-based catalysts in toluene.

| . Exp. | Mon | LA | Mon./LA | T[°C] | $M_n$[b] | Đ | Y [%][c] | rr [%][d] |
|---|---|---|---|---|---|---|---|---|
| 8 | *t*BuMA | $Al(C_6F_5)_3$ | 100 | 60 | - | - | - | - |
| 9 | *t*BuMA | $Al(nOct)_3$ | 100 | 60 | 155 | 1.33 | 100 | 62 |
| 10 | *t*BuMA | $Al(nOct)_3$ | 100 | rt | 175 | 1.19 | 42 | 66 |
| 11 | *t*BuMA | $Al(nOct)_3$ | 100 | rt | 395 | 1.25 | 83 | 70 |
| 12 | *t*BuMA | $Al(iBu)_3$ | 100 | rt | - | - | - | - |
| 13 | *t*BuMA | $Al(Me)_3$ | 100 | rt | - | - | traces | - |
| 14 | IPox | $Al(C_6F_5)_3$ | 100 | rt | - | - | 0[e] | - |
| 15 | IPox | $Al(Ph)_3$ | 150 | 60 | 18 | 1.29 | 59 | 46 |
| 16 | IPox | $Al(Ph)_3$ | 100 | rt | 12 | 1.19 | 34 | 63 |
| 17 | IPox | $Al(Ph)_3$ | 100 | rt | 63 | 1.05 | 55 | 72 |
| 18 | IPox | $Al(Ph)_3$ | 100 | 0 | 15 | 1.02 | 17 | 77 |

[a] Reaction time 60 min., total solvent volume 2 mL (solvent toluene, except exp. 11 pentane)
[b] determined by GPC-MALS or dual angle laser light scattering in $H_2O$ / THF (9 g/L tetrabutylammonium bromide) or THF at 40 °C, reported in $10^3$ g/mol,
[c] yield measured gravimetrically and by $^1H$ NMR spectroscopy,
[d] determined by $^{13}C$ NMR, [21] [e] ACF induces a cationic ring opening polymerization[22]

### Example 4

A polymer with enriched tacticity was synthesized using a catalyst of formula I, wherein $R^1,R^2 \neq R^3$.

N,N-dimethylacrylamide was polymerized in a total solvent volume of 2mL tetrahydrofuran with a ratio of 100:1 of monomer to catalyst at room temperature. The applied catalyst was bis((furan-2-ylmethyl)thio)(methyl)aluminum:

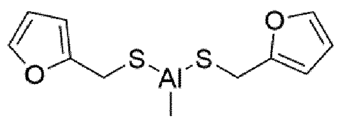

bis((furan-2-ylmethyl)thio)(methyl)aluminum
$C_{11}H_{13}AlO_2S_2$

After 2 minutes the reaction was quenched with methanol and the reaction solution was precipitated in pentane. The tacticity of the obtained polymer was quantified by $^{13}C$-NMR-Spectroscopy. The resulting spectrum is depicted in Figure 2. By performing a peak deconvolution the syndiotactic (rr) content of the polymer was determined to be 78%.

### Claims

1. System for polymerization comprising at least one Michael-type monomer and an aluminum compound $AlR^1R^2R^3$ as sole catalyst and initiator, wherein each of $R^1$, $R^2$, and $R^3$ independently is Cl, F, I, Br, linear, branched or cyclic alkyl, heterocycloalkyl, linear, branched or cyclic alkenyl, heterocycloalkenyl, linear, branched, or cyclic alkinyl,

heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl or alkoxy group independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms, or at least one electron-donating or electron-withdrawing group; with the proviso that not all three groups $R^1$, $R^2$, and $R^3$ are halogen, hydroxy, or alkoxy; or
wherein two of $R^1$, $R^2$, and $R^3$ together with Al form a substituted or unsubstituted cyclic group comprising 2 to 5 carbon atoms or 2 to 4 carbon atoms and 1 to 3 hetero atoms selected from O, S or N.

**2.** System for polymerization according to claim 1, comprising

a) at least one Michael-type monomer,
b) a compound $AlR^1R^2R^3$, wherein $R^1$, $R^2$, and $R^3$ are as defined in claim 1, as sole catalyst and initiator;
c) optionally an organic solvent,

wherein the catalyst and initiator is adapted to the monomer such that for an electron deficient monomer the catalyst and initiator is $AlR^1R^2R^3$ with a FIA of about 530 or less,; for a monomer having medium electrophilicity the catalyst and initiator is $AlR^1R^2R^3$ with a medium FIA of less than 530 and more than 393; and for an electron donating or electron-rich monomer the catalyst and initiator is $AlR^1R^2R^3$ with a low FIA of 393 or more.

**3.** System for polymerization according to claim 1 or claim 2 wherein the Michael-type monomer is selected from acrylates, acrylonitrile, vinylphosphonates, vinylsulfonates, heteroaromatic vinylcompounds or mixtures thereof.

**4.** System for polymerization according to one of the preceding claims wherein the Michael-type monomer is a vinylphosphonate or mono- or dialkyllvinylphosphonate; a vinylsulfonate or mono- or dialkylsulfonate, a substituted or unsubstituted acrylate or methacrylate, a substituted or unsubstituted acrylamide or methacrylamide, acrylonitrile, a substituted or unsubstituted heteroaromatic vinyl compound, a substituted or unsubstituted vinyl ketone, acrolein, an acrolein derivate, or a mixture of two or more thereof.

**5.** System for polymerization according to one of the preceding claims wherein the Michael-type monomer is butyl acrylate, isobutyl acrylate, tert.-butyl acrylate, isobornyl acrylate, furfuryl acrylate, glydidyl acrylate, butyl methacrylate, isobutyl methacrylate, tert.-butyl methacrylate, isobornyl methacrylate, furfuryl methacrylate, glydidyl methacrylate, or a mixture thereof.

**6.** A process for polymerization of Michael-type monomers using an aluminum compound as sole catalyst and initiator, which comprises the steps:

contacting an aluminum compound $AlR^1R^2R^3$, optionally dissolved in an organic solvent, with at least one Michael-type monomer, wherein each of $R^1$, $R^2$, and $R^3$ independently is Cl, F, I, Br, linear, branched or cyclic alkyl, heterocycloalkyl, linear, branched or cyclic alkenyl, heterocycloalkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl or alkoxy group independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms, or at least one electron-donating or electron-withdrawing group, with the proviso that not all three groups $R^1$, $R^2$, and $R^3$ are halogen, hydroxy, or alkoxy; or wherein two of $R^1$, $R^2$, and $R^3$ together with Al form a substituted or unsubstituted cyclic group comprising 2 to 5 carbon atoms or 2 to 4 carbon atoms and 1 to 3 hetero atoms selected from O, S or N; and
continuing the reaction to form a polymer by reaction with at least one type of Michael-type monomer.

**7.** Process according to claim 6 wherein the Michael-type monomer of step a) is independently selected from the group consisting of acrylates, acrylonitrile, vinylphosphonates, vinylsulfonates, or vinylpyridines and/or wherein the at least one Michael-type monomer of step b) is independently selected from the group consisting of vinylphosphonates, in particular diethylvinylphosphonate, or diisopropylvinylphosphonate; vinylsulfonates, substituted or unsubstituted acrylates and methacrylates, such as methyl acrylate, butyl acrylate, isobutyl acrylate, tert.-butyl acrylate, isobornyl acrylate, furfuryl acrylate, glydidyl acrylate; butyl methacrylate, isobutyl methacrylate, tert.-butyl methacrylate, isobornyl methacrylate, furfuryl methacrylate, glydidyl methacrylate, substituted or unsubstituted acrylamides, such as methacrylamide, dimethylacrylamide, acrylonitrile, or vinylpyridines, vinyl ketones, acrolein and acrolein derivates.

**8.** Process according to one of claims 6 and 7, wherein the ratio of catalyst to monomer is 1:0.5 to 2000:1, such as 1:1 to 1000:1.

**9.** Polymer obtainable with a process of one of claims 6 to 8.

**10.** Polymer according to claim 9, wherein the polymer is a polymer or copolymer of one or more of Michael monomers selected from the group consisting of vinylphosphonate, vinylsulfonate, substituted or unsubstituted acrylate and methacrylate, such as butyl acrylate, isobutyl acrylate, tert.-butyl acrylate, isobornyl acrylate, furfuryl acrylate, glydidyl acrylate; substituted or unsubstituted acrylamide, such as methacrylamide, dimethylacrylamide, acrylonitrile, vinylpyridine, vinyl ketone, acrolein or an acrolein derivate.

**11.** Process for preparing a functionalized polymer comprising contacting $AlR^1R^2R^3$, optionally dissolved in an organic solvent, with a Michael-type compound to form a polymer, wherein each of $R^1$ and $R^2$, is independently Cl, F, I, Br or linear, branched or cyclic alkyl, heterocycloalkyl, linear, branched or cyclic alkenyl, heterocycloalkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl, or alkoxy independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms; or wherein two of $R^1$, $R^2$, and $R^3$ together with Al form a substituted or unsubstituted cyclic group comprising 2 to 5 carbon atoms or 2 to 4 carbon atoms and 1 to 3 hetero atoms selected from O, S or N; and wherein $R^3$ is a transferable group carrying at least one functional group.

**12.** Process for preparing a functionalized polymer according to claim 11, wherein the functional group is an olefinic group, an aromatic group, a heteroaromatic group, an alkinyl group, a mercapto group, a furfuryl group, a chemoactive or bioactive group, a nucleobase, wherein optionally the functionalized Michael-type monomer is furfuryl acrylate or furfuryl methacrylate.

**13.** Functionalized polymer, obtainable with the process of claim 11 or 12.

**14.** Process for preparing a polymer having tacticity comprising contacting $AlR^1R^2R^3$, optionally dissolved in an organic solvent, with a Michael-type compound to form a polymer, wherein each of $R^1$, $R^2$, and $R^3$, is independently Cl, F, I, Br or linear, branched or cyclic alkyl, heterocycloalkyl, linear, branched or cyclic alkenyl, heterocycloalkenyl, linear, branched, or cyclic alkinyl, heterocycloalkinyl, linear, branched, or cyclic alkoxy, aryl, heteroaryl, aryloxy, silyl, metallocenyl, nitro, nitroso, hydroxy, or carboxyl, wherein each alkyl, alkenyl, alkinyl, or alkoxy independently has up to 12 carbon atoms, wherein each aryl or heteroaryl independently has 5 to 10 ring atoms, wherein any hetero group has at least one hetero atom selected from O, S or N, wherein each alkyl, alkenyl, alkinyl or alkoxy, heterocycloalkyl, heterocycloalkenyl, heterocycloalkinyl, aryl, heteroaryl, aryloxy group can be substituted by 1 up to the highest possible number of halogen atoms; or wherein two of $R^1$, $R^2$, and $R^3$ together with Al form a substituted or unsubstituted cyclic group comprising 2 to 5 carbon atoms or 2 to 4 carbon atoms and 1 to 3 hetero atoms selected from O, S or N, and wherein either all three groups $R^1$, $R^2$, and $R^3$ are different or $R^1$ and $R^2$ are the same and $R^3$ is different and is a bulky group.

**15.** Tactic polymer, obtainable with the process of claim 14.

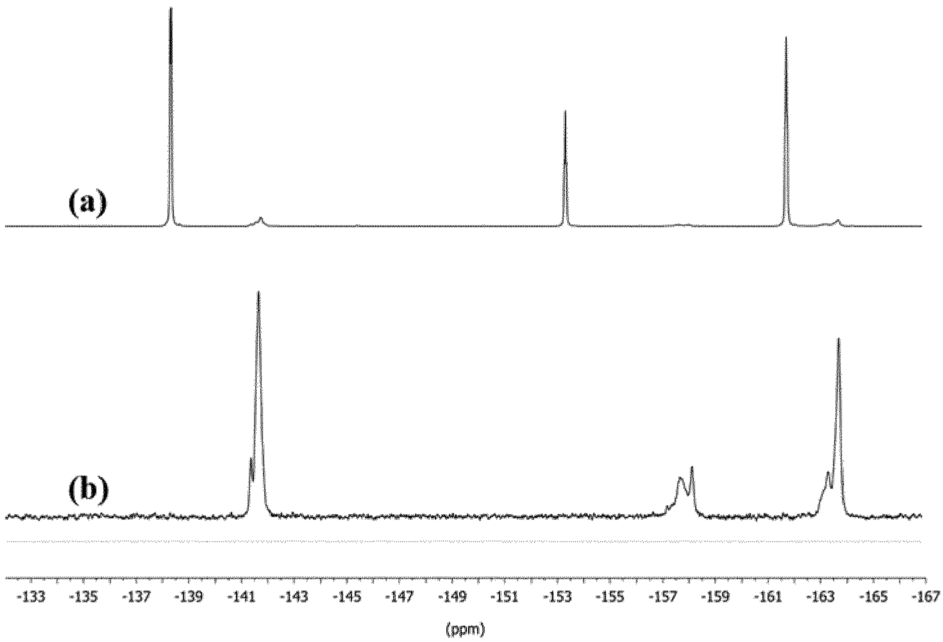
(a)
(b)
-133 -135 -137 -139 -141 -143 -145 -147 -149 -151 -153 -155 -157 -159 -161 -163 -165 -167
(ppm)

FIG. 1

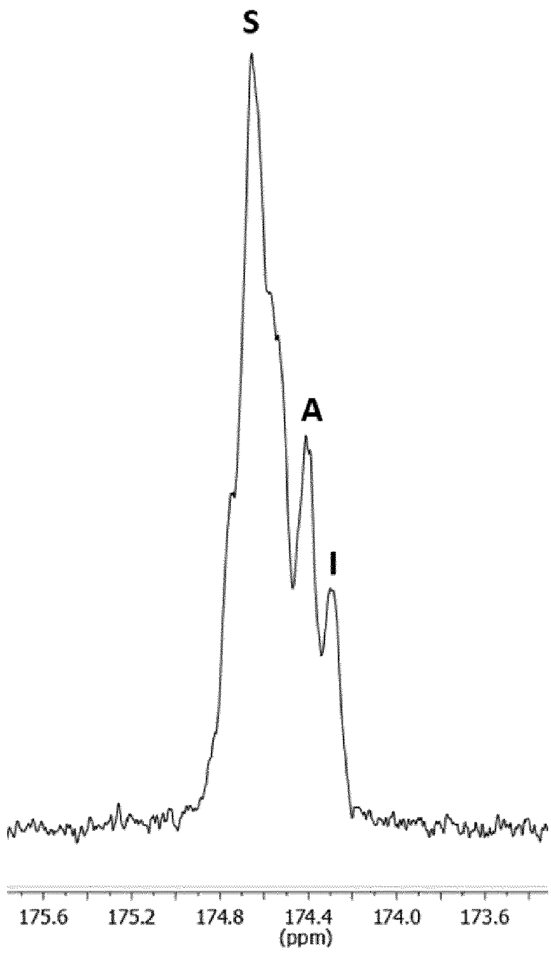


FIG. 2

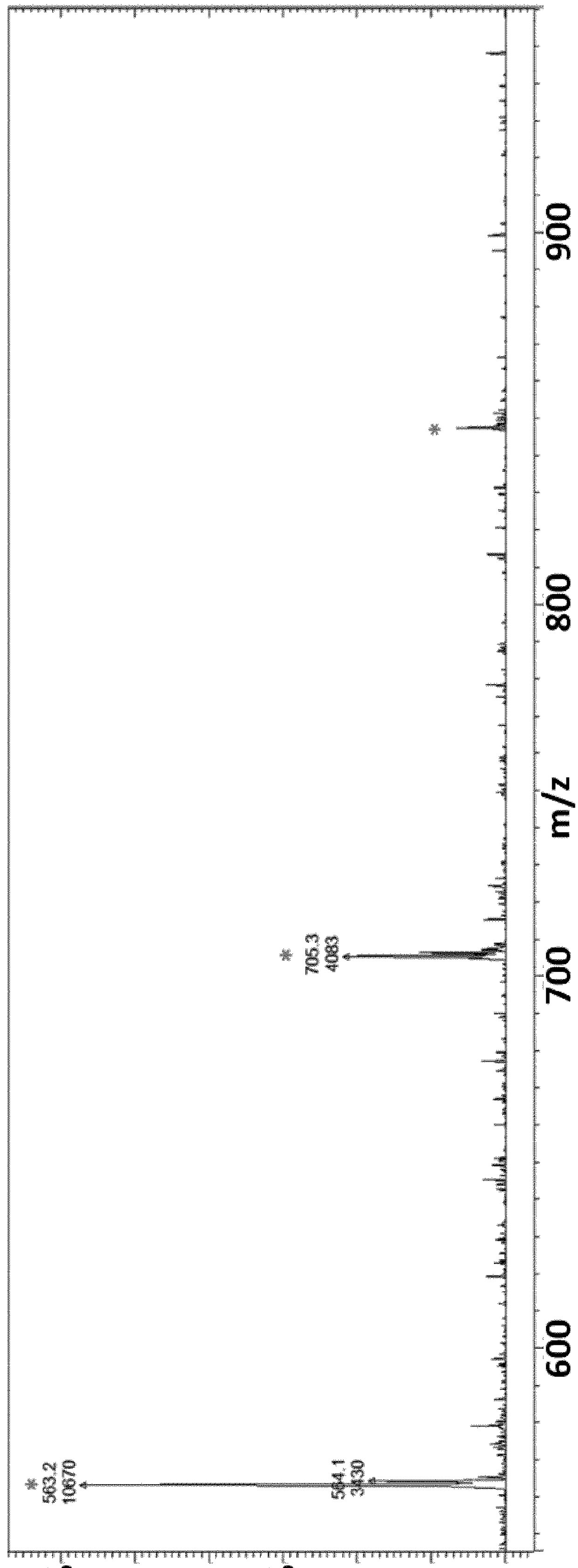


FIG. 3

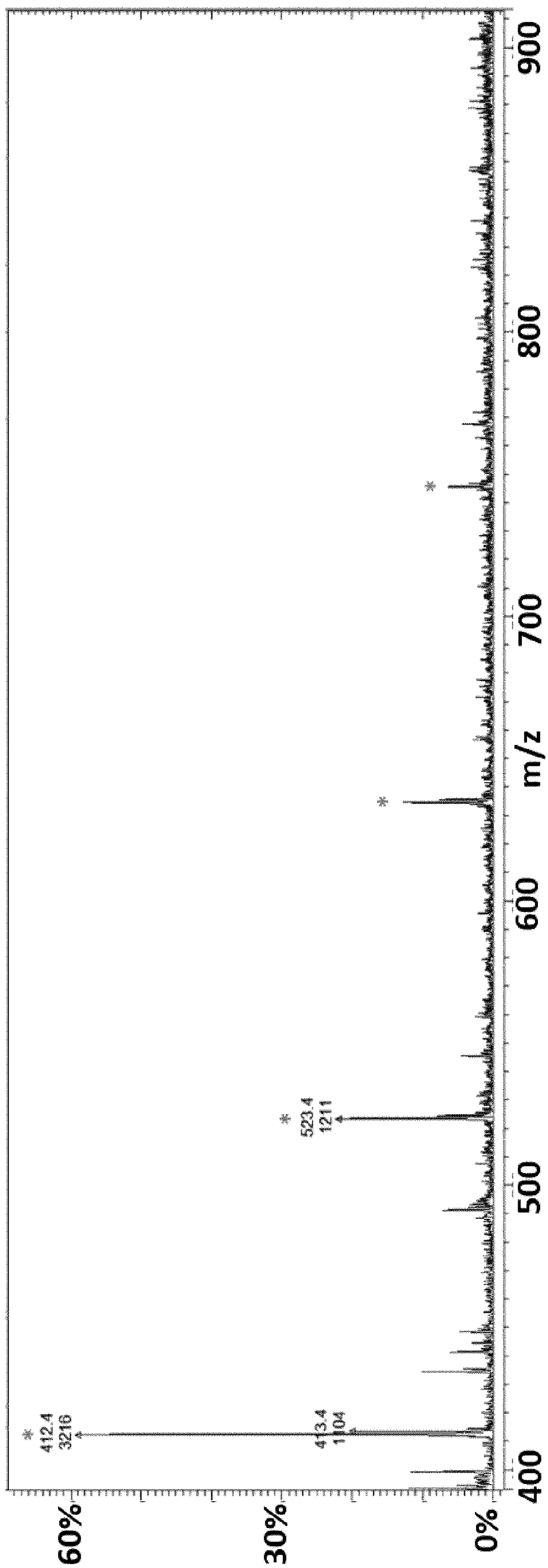


FIG. 4

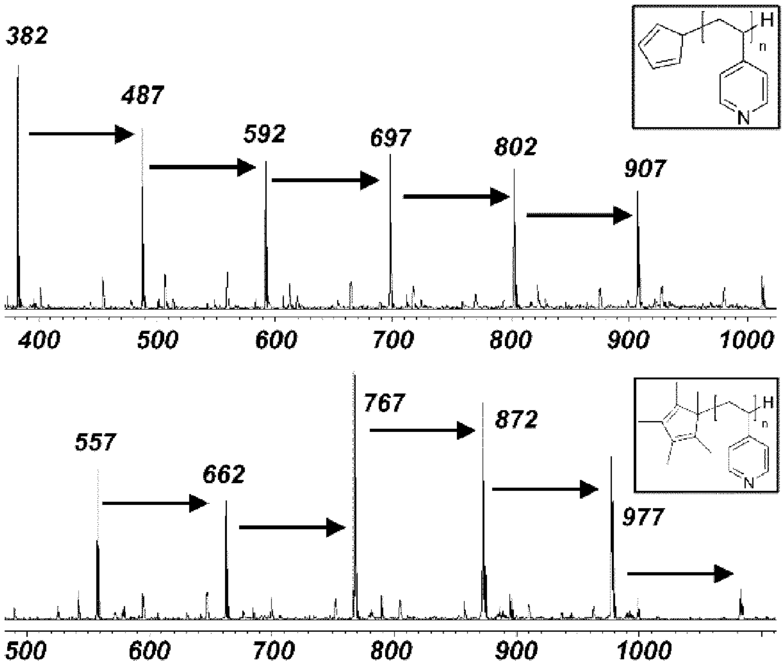
382
487
592
697
802
907
400
500
600
700
800
900
1000
557
662
767
872
977
500
600
700
800
900
1000

FIG. 5

Europäisches Patentamt
European Patent Office
Office européen des brevets

# EUROPEAN SEARCH REPORT

Application Number
EP 16 19 0707

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | KURAN WITOLD ET AL: "Terpolymerization of polar vinyl monomers with butadiene and styrene in - the presence of Lewis acids", MAKROMOLEKULARE CHEMIE, MACROMOLECULAR CHEMISTRY AND PHYSICS, WILEY - V C H VERLAG GMBH & CO. KGAA, CH, vol. 178, no. 7, 1 July 1977 (1977-07-01), pages 1873-1879, XP009193813, ISSN: 0025-116X * the whole document * ----- | 1-15 | INV. C08F4/00 C08F120/16 C08F120/44 C08F120/56 |
| X | LEE H-Y ET AL: "Copolymerization of a polyhydrocarbon macromonomer with methyl acrylate and acrylonitrile in the presence of a Lewis acid", ACTA POLYMERICA, VCH, WEINHEIM, DE, vol. 45, no. 6, 1 January 1994 (1994-01-01), pages 413-418, XP009193808, ISSN: 0323-7648 * table 2 * ----- | 1-15 | |
| | | | TECHNICAL FIELDS SEARCHED (IPC) |
| X | US 3 635 924 A (NAKAGUCHI KOHEI ET AL) 18 January 1972 (1972-01-18) * the whole document * ----- | 1-15 | C08F |
| X | US 3 326 870 A (KOHEI NAKAGUCHI ET AL) 20 June 1967 (1967-06-20) * the whole document * ----- | 1-15 | |
| | -/-- | | |

1

The present search report has been drawn up for all claims

| Place of search | Date of completion of the search | Examiner |
|---|---|---|
| Munich | 22 March 2017 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 16 19 0707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AOSHIMA HIROSHI ET AL: "Interconvertible Living Radical and Cationic Polymerization through Reversible Activation of Dormant Species with Dual Activity", ANGEWANDTE CHEMIE INTERNATIONAL EDITION, WILEY-VCH VERLAG GMBH, vol. 53, no. 41, 6 October 2014 (2014-10-06), pages 10932-10936, XP009193821, ISSN: 1433-7851 * the whole document * ----- | 1-15 | |
| A | FURUKAWA JUNJI ET AL: "Carbon-13 NMR spectroscopy of acrylic monomer and Lewis acid complexes", JOURNAL OF POLYMER SCIENCE, POLYMER CHEMISTRY EDITION, INTERSCIENCE PUBLISHERS, NEW YORK, NY, US, vol. 12, no. 8, 1 January 1974 (1974-01-01), pages 1799-1807, XP009193817, ISSN: 0360-6376 * the whole document * ----- | 1-15 | |

TECHNICAL FIELDS SEARCHED (IPC)

The present search report has been drawn up for all claims

1

| Place of search | Date of completion of the search | Examiner |
|---|---|---|
| Munich | 22 March 2017 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 16 19 0707

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2017

| Patent document cited in search report | Publication date | Patent family member(s) | Publication date |
|---|---|---|---|
| US 3635924 A | 18-01-1972 | DE 1645291 A1 | 02-04-1970 |
| | | GB 1107137 A | 20-03-1968 |
| | | US 3635924 A | 18-01-1972 |
| US 3326870 A | 20-06-1967 | DE 1221802 B | 28-07-1966 |
| | | GB 1056236 A | 25-01-1967 |
| | | US 3326870 A | 20-06-1967 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **C. TANG et al.** *Macromolecules,* 2003, vol. 36, 8587-8589
- **Y. ZHANG et al.** *Angewandte Chemie,* 2010, vol. 122, 10356-10360
- **ZHANG et al.** *Dalton transactions,* 2012, vol. 41, 9119-9134
- *Synlett,* 2014, vol. 25, 1534
- **SALZINGER, STEPHAN.** Expansion of Rare Earth Metal-Mediated Group Transfer Polymerization to New Monomers. *Diss. Technische Universität München,* 2013, 218
- **SOLLER, BENEDIKT.** Rare Earth Metal-Mediated Group Transfer Polymerization of Vinylphosphonates: Initiation, Propagation, and Stereoregularity. *Technische Universitat München, Diss. Technische Universität München,* 2016
- **SOLLER, BENEDIKT S. ; STEPHAN SALZINGER ; BERNHARD RIEGER.** Rare Earth Metal-Mediated Precision Polymerization of Vinylphosphonates and Conjugated Nitrogen-Containing Vinyl Monomers. *Chemical reviews,* 2015, vol. 116.4, 1993-2022
- **ZHANG, NING et al.** Rare earth metal-mediated group-transfer polymerization: from defined polymer microstructures to high-precision nano-scaled objects. *Journal of the American Chemical Society,* 2013, vol. 135.24, 8810-8813
- **HAARTZ, J. ; MCDANIEL, D. H.** *J. Am. Chem. Soc.,* 1973, vol. 95, 8562
- **LARSON, J. ; MCMAHON, T.** *J. Am. Chem. Soc.,* 1985, vol. 107, 766
- **MÜLLER, L. O. ; HIMMEL, D. ; STAUFFER, J. ; STEINFELD, G. ; SLATTERY, J. ; SANTISO-QUIÑONES, G. ; BRECHT, V. ; KROSSING, I.** *Angew. Chem., Int. Ed.,* 2008, vol. 47, 7659
- **N. BARTLETT et al.** *Inorg. Chem.,* 1984, vol. 23, 3167-3173